# EUROPÄISCHE PATENTSCHRIFT

(11) **EP 2 632 302 B1**
(45) Veröffentlichungstag und Bekanntmachung des Hinweises auf die Patenterteilung: **16.07.2014**
(21) Anmeldenummer: 11700185.9
(22) Anmeldetag: 14.01.2011
(51) Int. Cl.: A47J 47/01, B65D 83/04, G01F 11/26, B65D 25/04

(54) **SPENDER ZUM PORTIONIERTEN AUSGEBEN VON IM SPENDER BEVORRATETEM, GROBKÖRNIGEN UND RIESELFÄHIGEN GUT**
DISPENSER FOR PORTIONED OUTPUT OF COARSE-GRAINED AND FLOWING MATERIAL CONTAINED IN THE DISPENSER
DISTRIBUTEUR POUR LA SORTIE EN PORTION DU MATÉRIEL VERSABLE SOUS FORME DE GROS GRAINS CONTENU DANS LE DISTRIBUTEUR

(30) Priorität: 28.10.2010 CH 18112010
(43) Veröffentlichungstag der Anmeldung: 04.09.2013
(73) Patentinhaber: Innoform AG, 8103 Unterengstringen (CH)
(72) Erfinder: KILLER, Reto, 5412 Gebenstorf (CH); HUG, Andreas, 5604 Hendschiken (CH)
(74) Vertreter: Rentsch Partner AG
(86) Internationale Anmeldenummer: PCT/EP2011/050459
(87) Internationale Veröffentlichungsnummer: WO 2012/055578

(56) Entgegenhaltungen:
- EP-A1- 0 284 557
- DE-U1- 20 302 346
- FR-A1- 2 726 154
- GB-A- 709 712
- US-A- 6 039 220
- US-A1- 2005 011 465
- US-A1- 2009 194 566

## Beschreibung

### TECHNISCHES GEBIET

Die vorliegende Erfindung bezieht sich auf das Gebiet der Gegenstände des täglichen Bedarfs. Sie betrifft einen Spender zum portionierten Ausgeben von im Spender bevorratetem, grobkörnigen und rieselfähigen Gut gemäss dem Oberbegriff des Anspruchs 1.

### STAND DER TECHNIK

Es besteht vielfach das Bedürfnis, Genuss- oder Lebensmittel, die einen grobkörnigen Charakter haben und schütt- oder rieselfähig sind, wie beispielsweise verschiedene Formen von Nüssen, insbesondere Erdnüsse, Haselnüsse oder Cashewnüsse, oder Schokolinsen, d. h. mit einem zuckerhaltigen Überzug versehene Schokoladenkörper, oder dergleichen, portionsweise aus einem Behälter (Spender) auszugeben (zu spenden).

Aus der Druckschrift GB 2 168 328 ist ein als Standgerät ausgebildeter Spender bekannt, bei dem im Inneren eine mittels eines Gummibandes federnd gelagerte Sperre vorgesehen ist, die von aussen durch Betätigen eines Handgriffs kurzzeitig geöffnet werden kann, um eine Portion des zu spendenden Gutes auf eine schräg stehende Rutsche auszugeben. Aufgrund der bewegten Teile und der federnden Lagerung ist der innere Aufbau kompliziert und fehleranfällig. Darüber hinaus kann der bekannte Spender nur schlecht gereinigt werden.

Dasselbe gilt auch für einen Spender der in der Druckschrift US 4,376,499 offenbarten Art, der mit einer beweglichen, sehr kompliziert aufgebauten Ausgabemechanik ausgerüstet ist, ebenso, wie für den Spender aus der Druckschrift EP 0 286 194 A1.

Andere Arten von Spendern, wie sie beispielsweise in der EP 0 492 534 A1 oder in der DE 694 00 994 T2 offenbart sind, arbeiten mit im Inneren des Spenders angeordneten Portionierungsräumen, die in einem ersten Bewegungsvorgang (Umdrehen) gefüllt werden, um dann in einem zweiten Bewegungsvorgang geleert zu werden. Neben einem vergleichsweise komplizierten inneren Aufbau und verschlechterten Reinigungsmöglichkeiten kommt als Nachteil noch eine vergleichsweise komplizierte Bedienung hinzu.

Aus der Druckschrift US 2009/194566 A1 ist ein Spender für eine Feuchtigkeitsunempfindliche körnige Substanz bekannt, der eine Vorratskammer mit einer Bodenfläche und einer darin angeordneten Öffnung zum Einfüllen und Dispensieren der körnigen Substanz aufweist. Weiterhin ist eine Aufnahme mit einer ebenen Grundfläche vorgesehen, die die Vorratskammer aufnimmt, wenn sie nicht benutzt wird und eine Dichtung gegen den Eintritt von Feuchtigkeit in die Kammer bildet.

Aus der Druckschrift EP 0 284 557 A1 ist ein Tablettenspender bekannt. Der obere Teil des Tablettenspenders hat einen trichterförmigen Tablettenvorratsraum, der von einer Kappe verschlossen wird. Eine rohrförmige Verlängerung des Vorratsraumes bildet zusammen mit einer säulenförmigen Ringwand mindestens einen Tablettenorientierungsraum. Über eine als Rutsche dienende Schulter gelangen die Tabletten in einen Abgabemechanismus, der im unteren Teil untergebracht ist. Der Tablettenspender kann, während er auf einer Tischfläche steht, lediglich durch Druck auf die Kappe betätigt werden und eignet sich insofern auch für in ihrer Motorik geschädigte Personen.

### DARSTELLUNG DER ERFINDUNG

Es ist daher eine Aufgabe der Erfindung, einen Spender zu schaffen, der besonders einfach aufgebaut ist und das darin befindliche Gut mit einer einfachen kurzen Schüttelbewegung portioniert freigibt, leicht zu reinigen ist und aufgrund fehlender beweglicher Teile dauerhaft sicher funktioniert.

Diese und andere Aufgaben werden durch die Merkmale des Anspruchs 1 gelöst.

Der erfindungsgemässe Spender zum portionierten Ausgeben von im Spender bevorratetem, grobkörnigen und rieselfähigen Gut, insbesondere in Form von Erdnüssen, Schokolinsen oder dergleichen, umfasst einen Behälter mit einer Oberseite und einer Unterseite zur Aufnahme des zu spendenden Guts. Der zeichnet sich dadurch aus, dass auf der Unterseite eine erste Öffnung vorgesehen ist, von der aus sich in vertikaler Richtung ein Fallrohr in das Innere des Behälters erstreckt, welches Fallrohr am oberen Ende eine zweite Öffnung aufweist, durch welche das im Behälter vorhandene Gut in das Fallrohr eintreten und durch die erste Öffnung nach unten aus dem Behälter austreten kann, und dass im Bereich der zweiten Öffnung ein Umlenkelement angeordnet ist, welches im Behälter aufsteigendes Gut in die zweite Öffnung hinein umgelenkt.

Unter grobkörnigem Gut wird dabei insbesondere ein Gut oder Lebensmittel verstanden, dessen einzelne Körner deutlich grösser sind als beispielsweise die Körner von Kristallzucker oder Speisesalz. Eine gängige Korngrösse ist die von Erdnüssen, Haselnüssen, Mandeln oder kleinen Schokolinsen oder gebackenen Snacks (z.B. sogenannte Fischli) oder dergleichen. Die Rieselfähigkeit stellt sicher, dass die Körner nicht aneinander kleben oder verbacken, so dass die einzelnen Körner im Behälter beim Schütteln hochsteigen und in das Fallrohr umgelenkt werden können.

Insbesondere ist der Behälter in einer Trennebene in ein Oberteil und ein Unterteil auftrennbar und lässt sich aus dem Oberteil und dem Unterteil lösbar zusammensetzen, wobei das Fallrohr am Unterteil angeordnet ist, und das Umlenkelement am Oberteil angeordnet ist. Hierdurch lässt sich der Behälter besonders einfach herstellen, befüllen und auch reinigen.

Eine Ausgestaltung zeichnet sich dadurch aus, dass das Fallrohr am Unterteil angeformt ist und eine einstückige Einheit bildet, und dass das Umlenkelement am Oberteil angeformt ist und eine einstückige Einheit bildet. Hierdurch kann die Herstellung weiter vereinfacht werden. Darüber hinaus ergibt sich ein einfacher Zusammenbau und eine grosse mechanische Festigkeit.

Eine andere Ausgestaltung ist dadurch gekennzeichnet, dass der Behälter zu einer Mittelachse rotationssymmetrisch ausgebildet ist, dass das Fallrohr im wesentlichen zylindrisch ausgebildet ist, und dass die Mittelachse zugleich die Zylinderachse des Fallrohrs ist. Hierdurch ergibt sich eine vereinfachte Handhabung, weil es unerheblich ist, von welcher Seite der Behälter ergriffen wird. Darüber hinaus kann das im Behälter befindliche Gut, wenn der Behälter durchsichtig ist, von allen Seiten gleich gut betrachtet werden.

Eine weitere Ausgestaltung ist dadurch gekennzeichnet, dass das Oberteil des Behälters nach aussen gewölbt ausgebildet ist, derart, dass im Behälter aufsteigendes Gut auf der Innenseite des Oberteils ins Zentrum des Oberteils umgelenkt wird, und dass das Umlenkelement als senkrecht nach innen gerichteter Zapfen im Zentrum des Oberteils angeordnet ist. Hierdurch ergibt sich bei einer einfahren kurzen Schüttelbewegung eine sichere Umlenkung des zu spendenden Gutes in das Fallrohr.

Eine andere Ausgestaltung der Erfindung zeichnet sich dadurch aus, dass das Umlenkelement und die zweite Öffnung in Grösse und Anordnung relativ zueinander derart ausgebildet sind, dass gleichzeitig mehrere Elemente bzw. Körner des zu spendenden Gutes durch die zweite Öffnung in das Fallrohr eintreten können. Dies ist vor allem dann wünschenswert, wenn es sich bei dem zu spendenden Gut um Nüsse oder kleine Snacks handelt, die üblicherweise in einer grösseren Anzahl gleichzeitig in die Hand genommen und konsumiert werden.

Handelt es sich bei dem zu spendenden Gut dagegen um grössere, insbesondere kugelförmige, einzelne Elemente wie zum Beispiel Schoko- oder Kaugummikugeln, die üblicherweise einzeln in die Hand genommen und konsumiert werden, kann es von Vorteil sein, wenn das Umlenkelement und die zweite Öffnung (in Grösse und Anordnung relativ zueinander derart ausgebildet sind, dass jeweils nur ein Element des zu spendenden Gutes durch die zweite Öffnung in das Fallrohr eintreten kann. Auf diese Weise können in Einklang mit den Konsumgewohnheiten einzelne Elemente gespendet werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1-6: verschiedene Ansichten eines aus einem Kunststoff hergestellten Spenders gemäss einem ersten Ausführungsbeispiel der Erfindung im geschlossenen Zustand (Fig. 1-4) und im geöffneten Zustand (Fig. 5 und 6);
- Fig. 7-9,11: verschiedene Ansichten eines aus Glas hergestellten Spenders gemäss einem zweiten Ausführungsbeispiel der Erfindung;
- Fig. 10: ein erstes beispielhaftes Verschlusselement für den Spender gemäss Fig. 7-9;
- Fig. 12: den Spender gemäss Fig. 7-9 mit dem angebrachten Verschlusselement aus Fig. 10;
- Fig. 13: den Spender gemäss Fig. 7-9 in einem zweiten beispielhaften Verschlusselement;
- Fig. 14: in mehreren Teilfiguren (a) bis (d) verschiedene Schritte beim Bedienen des Spenders aus Fig. 9; und
- Fig. 15: in einer zu Fig. 14 vergleichbaren Darstellung in mehreren Teilfiguren (a) bis (d) verschiedene Schritte beim Bedienen eines Spenders, der zum einzelnen Spenden von grösseren, insbesondere kugelförmigen Elementen ausgelegt ist.

### WEGE ZUR AUSFÜHRUNG DER ERFINDUNG

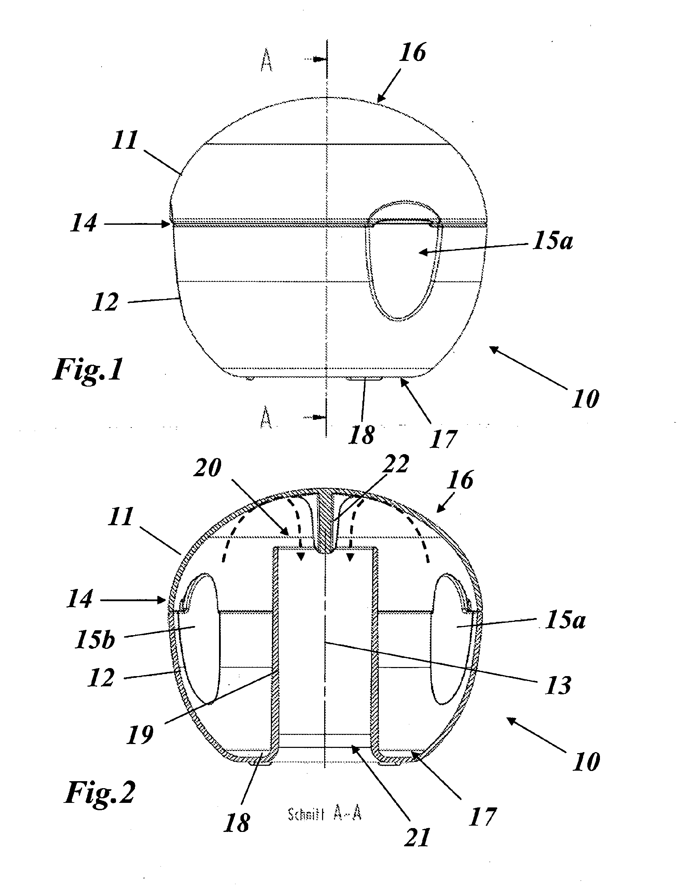

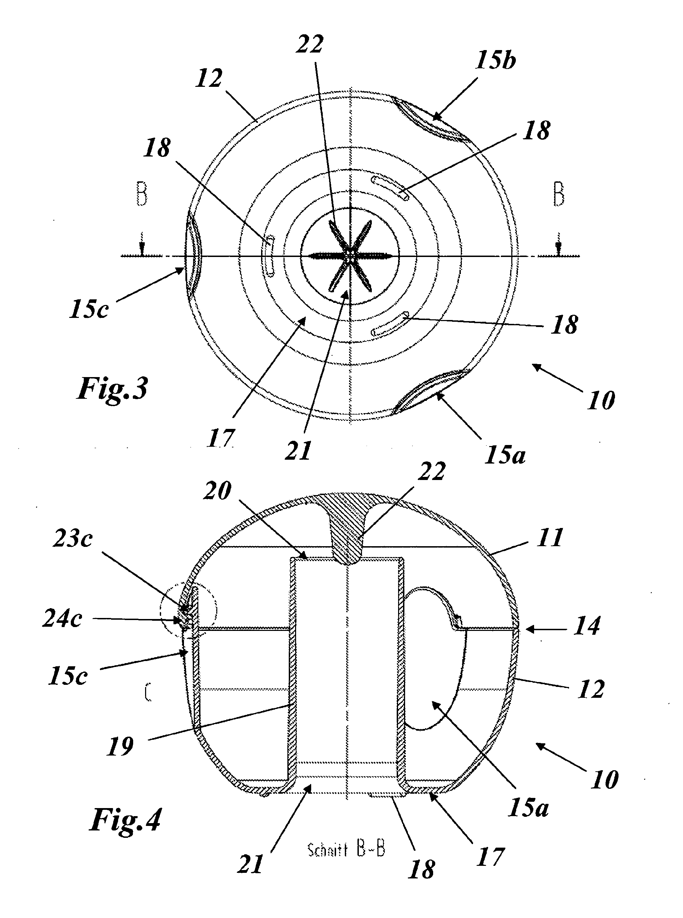

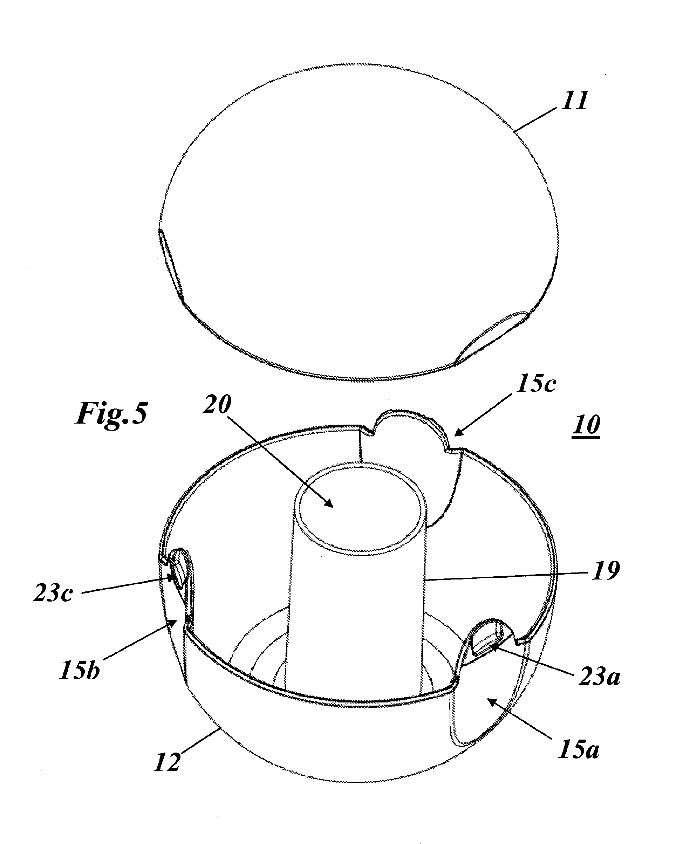

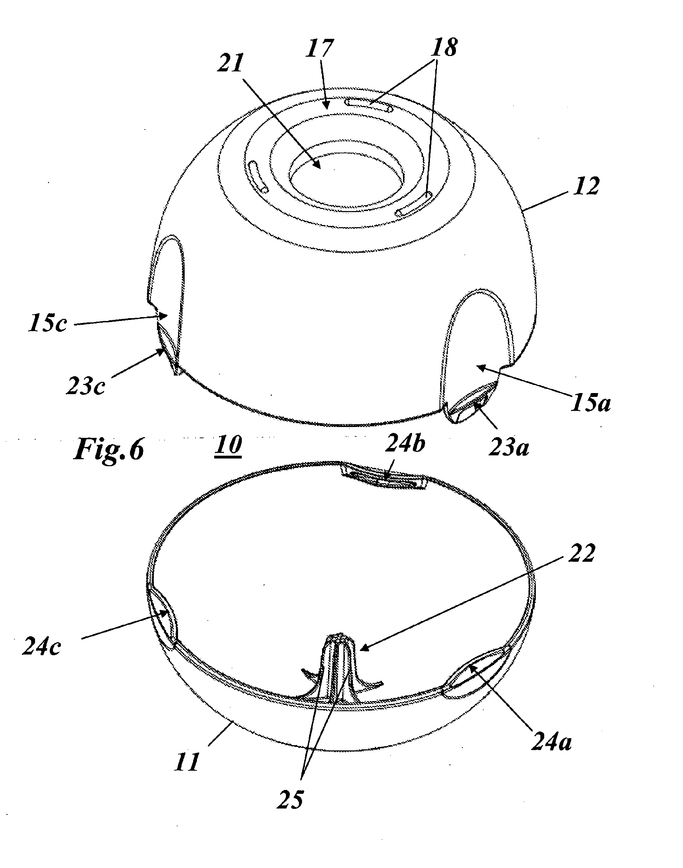

Fig. 1-6 zeigen verschiedene Ansichten eines aus einem Kunststoff hergestellten Spenders 10 gemäss einem ersten Ausführungsbeispiel der Erfindung, wobei Fig. 1 eine Seitenansicht des geschlossenen Spenders 10, Fig. 2 einen Schnitt durch den Spender 10 in der Ebene A-A aus Fig. 1, Fig. 3 eine Draufsicht von unten, Fig. 4 einen Schnitt durch den Spender 10 in der Ebene B-B aus Fig. 3, Fig. 5 eine perspektivische Ansicht von schräg oben auf den geöffneten Spender 10 und Fig. 6 eine perspektivische Ansicht von schräg unten auf den geöffneten Spender 10 zeigen.

Der Spender 10 der Fig. 1-6 setzt sich zusammen aus einem Oberteil 11 und einem Unterteil 12, die in einer horizontalen Trennebene 14 getrennt und lösbar miteinander verbunden werden können. Für die lösbare Verbindung sind Verschlusselemente 15a-c im Bereich der Trennebene 14 am Umfang verteilt angeordnet. Im vorliegenden Beispiel sind jeweils um 120° versetzt drei Verschlusselemente 15a-c vorgesehen. Es ist jedoch denkbar, weniger oder mehr als drei Verschlusselemente einzusetzen. Wie insbesondere aus Fig. 4-6 erkennbar ist, sind pro Verschlusselement 15a-c im Unterteil 12 nach innen zurückgesetzt Halterippen 23a-c vorgesehen, die mit ebenfalls nach innen zurückspringenden Rastelementen 24a-c am Rande des Oberteils 11 in der aus Fig. 4 erkennbaren Weise zusammenwirken. Beim Aufsetzen des Oberteils 11 auf das Unterteil 12 greift das Oberteil 11 mit dem rippenförmigen Rastelement 24a-c hinter die entsprechende Halterippe 23a-c und rastet in der zugehörigen Vertiefung ein, so dass das Oberteil 11 nicht ohne Kraftaufwand gegenüber dem Unterteil 12 verdreht werden kann. Es versteht sich von selbst, dass auch andere Arten von Verschlusselementen einsetzbar sind, um Oberteil 11 und Unterteil 12 lösbar miteinander zu verbinden.

Der Spender 10 ist von der Grösse her vorzugsweise so ausgelegt, dass er mit einer Hand gefasst und in einer Hand gehalten werden kann. Er hat eine weitgehend kugelige Form und ist weitgehend rotationssymmetrisch zu einer vertikalen Mittelachse 13 ausgebildet. Das Unterteil 12 ist auf der Unterseite 17 abgeflacht, so dass sich eine Standfläche ergibt, mit der der Spender 10 auf eine ebene Unterlage gesetzt oder gestellt werden kann. An der Unterseite 17 können zusätzlich (insbesondere drei) kleine Füsse 18 angeformt sein, die einen sicheren Stand des Spenders 10 auf der Unterlage ermöglichen.

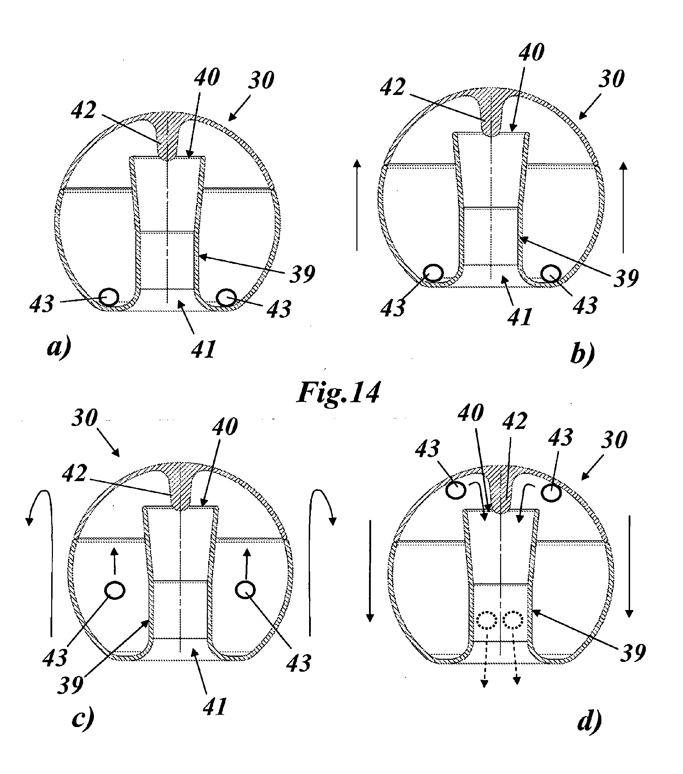

Zentrale Bestandteile des Systems zur Ausgabe des in den Behälter 11, 12 eingefüllten grobkörnigen Gutes (z.B. Erdnüsse, Schokolinsen etc.) sind ein vertikales Fallrohr 19 und ein auf der Innenseite des Oberteils 11 in zentraler Position ausgebildetes Umlenkelement 22, dass im Zusammenwirken mit dem nach aussen gewölbten Oberteil 11 dafür sorgt, dass im Inneren des Spenders nach oben aufsteigende einzelne Körner des Gutes in Richtung der in Fig. 2 eingezeichneten, gestrichelten Pfeile zunächst ins Zentrum und dann in eine obere Öffnung 20 des Fallrohrs 19 umgelenkt werden (siehe auch Fig. 14).

Das Fallrohr 19 bildet mit dem Unterteil 12 eine einstückige Einheit, wobei die untere Öffnung 21 des Fallrohres 19 zugleich eine nach aussen gehende Öffnung des Unterteils 12 bildet. Diese Konfiguration hat zur Folge, dass durch die obere Öffnung 20 in das Fallrohr 19 umgelenkte Körner schwerkraftbedingt durch das Fallrohr 19 nach unten aus dem Spender 10 herausfallen und zur weiteren Verwendung zur Verfügung stehen. Ebenso wie Fallrohr 19 und Unterteil 12 bilden auch das Oberteil 11 und das zentrale Umlenkelement 22 eine einstückige Einheit, die in einem Vorgang mittels Spritzgiessen hergestellt werden kann.

Grundsätzlich kann das Umlenkelement 22 als sich vertikal nach unten erstreckender, abgerundeter Zapfen aus Vollmaterial ausgebildet sein. Um für den Spritzgussprozess ungünstige Materialansammlungen zu vermeiden, kann das Umlenkelement 22 auch hohl ausgebildet sein, was jedoch zu einer tiefen Einsenkung auf der Aussenseite des Oberteils 11 führt. Um eine gleichmässig geschlossene Oberfläche des Oberteils ohne Materialanhäufung zu erreichen, kann das Umlenkelement, wie in Fig. 3 und Fig. 6 erkennbar, aus einer Vielzahl von entsprechend geformten, radial orientierten Lamellen 25 bestehen. Bestehen bleibt dabei der für die Umlenkung wichtige stetig gekrümmte Übergang zwischen Oberteil 11 und Umlenkelement 22 bzw. Lamellen 25. Die vertikale Länge des Umlenkelementes 22 wird vorzugsweise so gewählt, dass es geringfügig in die obere Öffnung 20 des Fallrohrs 19 eintaucht (siehe zum Beispiel Fig. 4). Hierdurch wird eine sichere Umlenkung erreicht, ohne den freien Rohrquerschnitt unnötig zu verkleinern. Es versteht sich von selbst, dass der Querschnitt der ringförmigen Öffnung zwischen Fallrohr 19 und Umlenkelement 22 der Art des zu spendenden Gutes, insbesondere der Korngrösse, angepasst sein muss.

Das Fallrohr 19 reicht weit in den Raum des Oberteils 10 hinein. Da der das Fallrohr 19 aussen umgebende ringförmige Raum den Speicherraum für das zu spendende Gut bildet, wird hierdurch der Raum des Behälters optimal ausgenutzt. Darüber hinaus wird in Zusammenwirkung mit dem Umlenkelement und der gekrümmten Innenwand des Oberteils die Umlenkung und die Dosierung der Körner bei der Ausgabe verbessert.

Oberteil 11 und Unterteil 12 können aus einem durchsichtigen Kunststoff bestehen. Es ist aber auch denkbar, eines der beiden Teile 11, 12 oder beide Teile einzufärben oder mit optischen Mustern zu versehen. Insbesondere kann die grosse und praktisch ungestörte Oberfläche des Oberteils 11 dazu benutzt werden, um Text, Bilder oder Werbung darauf anzubringen.

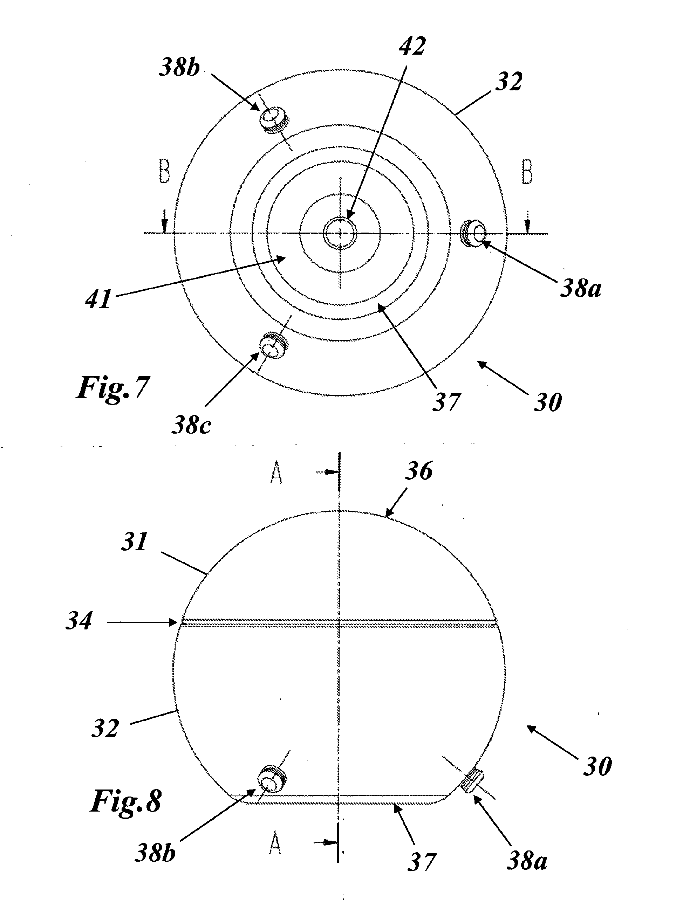

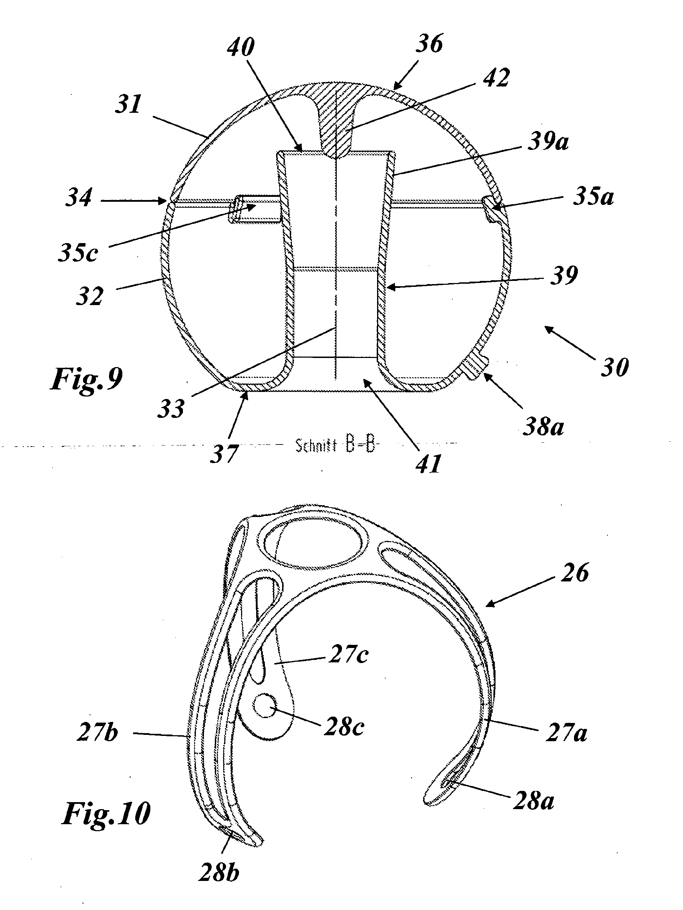

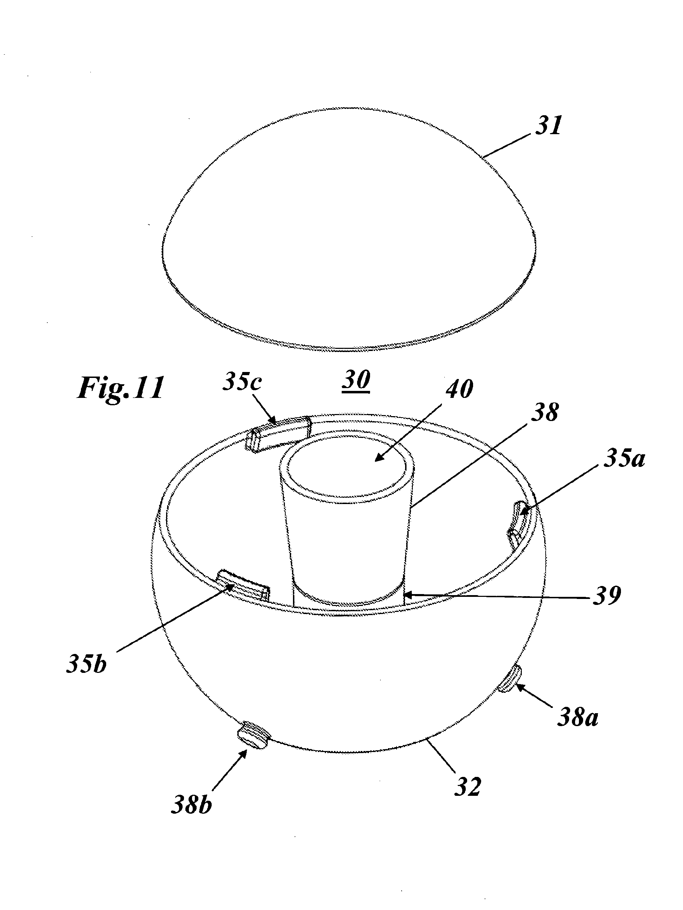

Die bisherigen Erläuterungen und Ausführungen bezogen sich auf einem Behälter aus Kunststoff, der entsprechend den Möglichkeiten des Spritzgussverfahrens mit angeformten Verschlusselementen ausgestattet war. Die Fig. 7-13 beziehen sich auf einen Spender 30, der aus einem Glas besteht. Der Spender 30 hat eine weitgehend ungestörte Kugelform mit einer als Standfläche ausgebildeten, abgeflachten Unterseite 37. Der Spender 30 besteht ebenfalls aus einem Oberteil 31 und einem Unterteil 32, auf welches das Oberteil 31 in einer Trennebene 34 aufgesetzt werden kann. Das Unterteil 32 ist, wie in Fig. 9 und Fig. 11 erkennbar, an seinem oberen Rand mit um 120° versetzt angeordneten, nach innen zurückgesetzt Führungselementen 35a-c versehen, die das Oberteil 31 beim Aufsetzen führen und zentrieren.

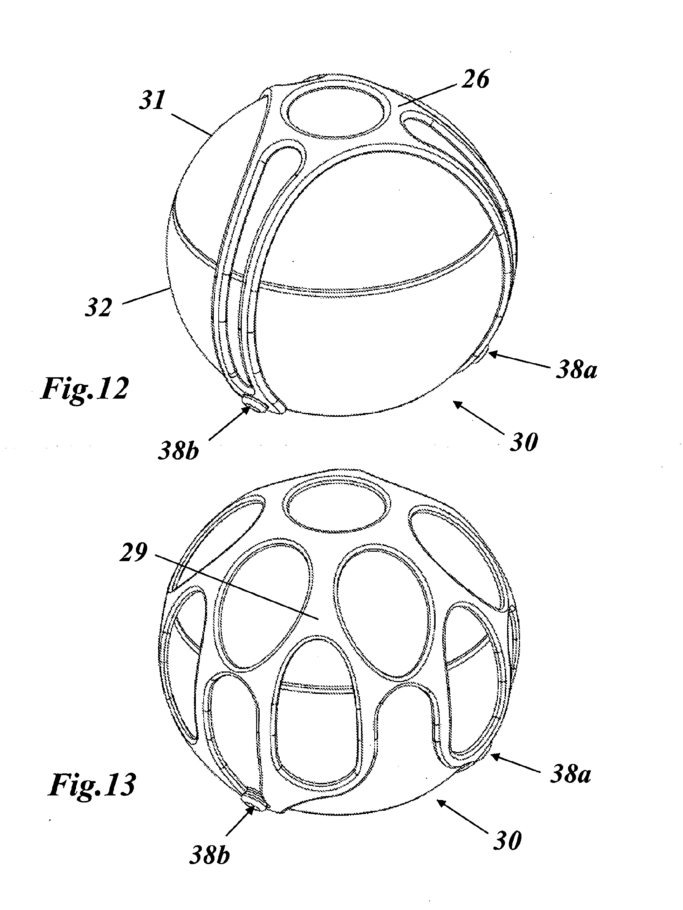

Weiterhin sind auf der Aussenseite des Unterteils 32 etwas oberhalb der Unterseite 37 drei um 120° versetzt angeordnete Knöpfe 38a-c ausgebildet, die zur lösbaren Befestigung eines flexiblen, elastischen Verschlusselements 26 (Fig. 10, 12) oder 29 (Fig. 13) dienen. Das Unterteil 32 hat wiederum auf der Unterseite 37 eine Öffnung 41, von der aus sich ein angeformtes Fallrohr 39 vertikal nach oben in das Innere des Spenders 30 erstreckt. Im vorliegenden Ausführungsbeispiel hat das Fallrohr 39 einen sich nach oben leicht erweiternden Trichterabschnitt 39a, mit dessen Hilfe der freie Querschnitt in der oberen Öffnung 40 verändert, insbesondere vergrössert werden kann.

Das Oberteil 31 ist auf der Innenseite wiederum mit einem zentralen Umlenkelement 42 ausgestattet, welches im Zusammenhang mit dem gewölbten Oberteil 31 dem Fallrohr 39 dieselbe Funktion erfüllt, wie das Umlenkelement 22 aus Fig. 4. Auch beim Spender 30 können Oberteil 31 und Unterteil 32 klar und durchsichtig, wahlweise eingefärbt oder auch matt ausgebildet sein.

Um das Oberteil 31 sicher und lösbar mit dem Unterteil 32 verbinden zu können, kann ein Verschlusselement 26 gemäss Fig. 10 oder 29 gemäss Fig. 13 verwendet werden. Das Verschlusselement 26 besteht aus einem vorzugsweise weichen, elastischen Kunststoff, so dass es sich aussen unter Ausbildung einer elastischen Spannung an den kugelförmigen Spender 30 anschmiegen kann (siehe Fig. 12 oder Fig. 13). Das Verschlusselement 26 hat drei von einem gemeinsamen Zentrum radial nach aussen sich erstreckende Laschen 27a-c, die an ihren freien Enden mit je einem Loch 28a-c versehen sind. Mit diesen Löchern 28a-c können die Laschen 27a-c in der in Fig. 12 gezeigten Art an den Knöpfen 38a-c auf dem Unterteil 32 befestigt werden. Eine analoge Befestigung ist auch bei dem in Fig. zwei 13 dargestellten Verschlusselement 29 vorgesehen. Beide Verschlusselemente, insbesondere jedoch das grösserflächige Verschlusselement 29, haben für die Glaskugel des Spenders 30 eine Schutzwirkung gegen Stösse oder Schläge von aussen. Darüber hinaus lässt sich die Glaskugel besser fassen und halten, wenn die Verschlusselemente 26, 29 aus einem oberflächlich griffigen Kunststoff bestehen. Der durchbrochene Charakter der Verschlusselemente 26, 29 sorgt dafür, dass die Sicht von aussen auf den Inhalt des Spenders 30 nur wenig beeinträchtigt wird. Die Verschlusselemente 26, 29 können als Träger von Text, Bildern oder allgemein Werbung eingesetzt werden.

Der beim Spenden ablaufende Vorgang im Spender kann anhand der Fig. 14 am Beispiel des Spenders 30 erläutert werden. Dazu werden zwei beispielhafte Körner 43 (Erdnüsse, Schokolinsen etc.) betrachtet, die im Ruhezustand des Spenders 30 im unteren Teil des Spenders (auf dem Boden) 30 ruhen (Fig. 14(a)).

Wird nun gemäss Fig. 14(b) der Spender 30 in die Hand genommen und am Anfang einer kurzen Schüttelbewegung nach oben bewegt (siehe die beiden Pfeile), bleiben die Körner 43 in ihrer Ruheposition im Spender 30, werden aber zusammen mit dem Spender 30 vertikal nach oben beschleunigt.

Wenn der vertikale Beschleunigungsvorgang beendet wird und eine Bewegungsumkehr des Spenders 30 nach unten stattfindet (Fig. 14(c)), bewegen sich die beschleunigten Körner 43 aufgrund ihrer Massenträgheit relativ zum Spender 30 nach oben.

Wenn sie bei dieser Relativbewegung auf die Innenwand des Oberteils auftreffen (Fig. 14(d)) werden sie an der gewölbten Wand zum Zentrum hin umgelenkt und durch das zentrale Umlenkelement 42 in die obere Öffnung 40 das Fallrohrs 39 eingeführt.

Schliesslich fallen die Körner 43 aufgrund der Schwerkraft im Fallrohr 39 nach unten (punktierte Darstellung in Fig. 14(d)) und treten nach unten aus dem Spender 30 aus.

In den erläuterten Ausführungsbeispielen hat der Spender eine kugelige Form. Es ist im Rahmen der Erfindung aber auch durchaus denkbar, andere Formen vorzusehen, die beispielsweise vieleckig ausgestaltet sind. Wesentlich ist, dass im Oberteil des Spenders die Umlenkung der Körner zum Zentrum bei dem in Fig. 14 beschriebenen Bewegungsablauf sichergestellt ist.

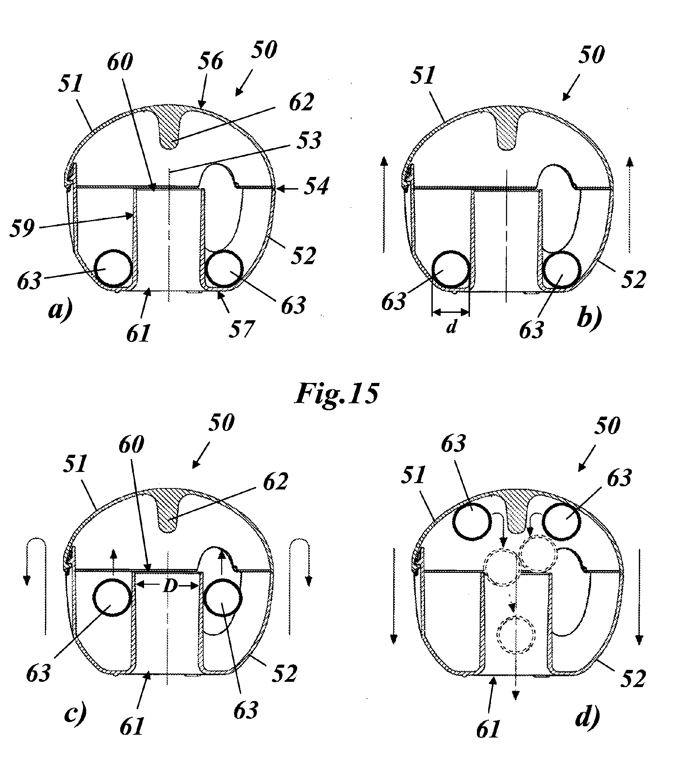

Fig. 15 zeigt in einer zu Fig. 14 vergleichbaren Darstellung den Vorgang des Spendens mit einem (in diesem Fall aus Kunststoff bestehenden) Spender 50, der wie die anderen erläuterten Spender 10 und 30 aus einem Oberteil 51 und einem Unterteil 52 zusammengesetzt ist und einen Behälter zur Aufnahme von zu spendendem Gut in Form von einzelnen kugelförmigen Elementen 63 mit einem Aussendurchmesser d bildet. Die kugelförmigen Elemente 63 können beispielsweise Schokokugeln sein, wie sie unter der Marken-Bezeichnung Maltesers^{®} von der Firma Mars im Handel angeboten werden, oder Kaugummikugeln oder umhüllte, z.T. von der Kugelform abweichende Süsswaren, wie sie von der Firma Mars unter der Markenbezeichnung m&m's^{®} verkauft werden.

Der in Fig. 15 dargestellte Spender 50 hat - wie bereits erläutert - eine gekrümmte Oberseite 56 und eine als Boden ausgebildete Unterseite 57. Im Bereich der Trennebene 54 von Oberteil 51 und Unterteil 52 sind Verschlusselemente angeordnet, deren Ausgestaltung und Funktion bereits im Zusammenhang mit dem Spender 10 erörtert worden sind. Im Unterteil 52 ist wiederum ein Fallrohr 59 angeordnet, dass mit einer unteren Öffnung 61 zum Aussenraum hin offen ist und am oberen Ende eine obere Öffnung 60 aufweist. Das Fallrohr 59 ist in diesem Beispiel mit einem konstanten Innendurchmesser D versehen. Es endet in diesem Fall mit dem oberen Ende auf Höhe der Trennebene 54. Gegenüber der oberen Öffnung 60 ist auf der Innenseite des Oberteils 51 wiederum ein zentrales Umlenkelement 62 angeformt, welches jedoch nicht in die obere Öffnung 60 des Fallrohres 59 hineinragt, sondern deutlich oberhalb des Fallrohrs 59 endet.

Wie sich insbesondere aus der Teilfigur 15 (d) ersehen lässt, können der Innendurchmesser D des Fallrohres 59 im Vergleich zum Aussendurchmesser d der kugelförmigen Elemente 63 und die Lage Umlenkelementes 62 relativ zur oberen Öffnung 60 des Fallrohres 59 so gewählt werden, dass beim Spendenvorgang, wie er in Fig. 15 dargestellt ist, jeweils nur eines der kugelförmigen Elemente 63 durch das Fallrohr 59 nach aussen abgegeben wird. Ein solches Spenden von einzelnen Elementen des Gutes ist insbesondere dann wünschenswert, wenn es sich um ein Gut handelt, das üblicherweise in Form von einzelnen Elementen konsumiert wird.

### Bezugszeichenliste

- 10,30,50: Spender
- 11,31,51: Oberteil
- 12,32,52: Unterteil
- 13,33,53: Mittelachse
- 14,34,54: Trennebene
- 15a-c: Verschlusselement
- 16,36,56: Oberseite (gekrümmt)
- 17,37,57: Unterseite (Boden)
- 18: Fuss
- 19,39,59: Fallrohr
- 20,40,60: obere Öffnung (Fallrohr)
- 21,41,61: untere Öffnung (Fallrohr)
- 22,42,62: Umlenkelement (zentral)
- 23a-c: Halterippe
- 24a-c: Rastelement
- 25: Lamelle
- 26,29: Verschlusselement (elastisch)
- 27a-c: Lasche
- 28a-c: Loch
- 35a-c: Führungselement
- 38a-c: Knopf
- 39a: Trichterabschnitt (Fallrohr)
- 43: Korn (Erdnuss, Schokolinse etc.)
- 63: kugelförmiges Element
- d: Aussendurchmesser (kugelförmiges Element)
- D: Innendurchmesser (Fallrohr)

## Patentansprüche

1. Spender (10, 30, 50) zum portionierten Ausgeben von im Spender (10, 30, 50) bevorratetem, grobkörnigen und rieselfähigen Gut (43, 63), insbesondere in Form von Erdnüssen, Schokolinsen oder -kugeln oder dergleichen, umfassend einen Behälter (11, 12; 31, 32; 51, 52) mit einer Oberseite (16, 36, 56) und einer Unterseite (17, 37, 57) zur Aufnahme des zu spendenden Guts, wobei auf der Unterseite (17, 37, 57) eine erste Öffnung (21, 41, 61) vorgesehen ist, von der aus sich in vertikaler Richtung ein Fallrohr (19, 39, 59) in das Innere des Behälters (11, 12; 31, 32; 51, 52) erstreckt, welches Fallrohr (19, 39, 59) am oberen Ende eine zweite Öffnung (20, 40, 60) aufweist, durch welche das im Behälter (11, 12; 31, 32; 51, 52) vorhandene Gut (43, 63) in das Fallrohr (19, 39, 59) eintreten und durch die erste Öffnung (21, 41, 61) nach unten aus dem Behälter (11, 12; 31, 32; 51, 52) austreten kann, **dadurch gekennzeichnet, dass** im Bereich der zweiten Öffnung (20, 40, 60) ein Umlenkelement (22, 42, 62) angeordnet ist, welches im Behälter (11, 12; 31, 32; 51, 52) aufsteigendes Gut (43, 63) in die zweite Öffnung (20, 40, 60) hinein umgelenkt, dass der Behälter (11, 12; 31, 32; 51, 52) in einer Trennebene (14, 34, 54) in ein Oberteil (11, 31, 51) und ein Unterteil (12, 32, 52) auftrennbar ist und sich aus dem Oberteil (11, 31, 51) und dem Unterteil (12, 32, 52) lösbar zusammensetzen lässt, dass das Fallrohr (19, 39, 59) am Unterteil (12, 32, 52) angeordnet ist, und dass das Umlenkelement (22, 42, 62) am Oberteil (11, 31, 51) angeordnet ist.

2. Spender nach Anspruch 1, **dadurch gekennzeichnet, dass** das Fallrohr (19, 39, 59) am Unterteil (12, 32, 52) angeformt ist und eine einstückige Einheit bildet, und dass das Umlenkelement (22, 42, 62) am Oberteil (11, 31, 51) angeformt ist und eine einstückige Einheit bildet.

3. Spender nach einem der Ansprüche 1-2, **dadurch gekennzeichnet, dass** der Behälter (11, 12; 31, 32; 51, 52) zu einer Mittelachse (13, 33, 53) rotationssymmetrisch ausgebildet ist, dass das Fallrohr (19, 39, 59) im Wesentlichen zylindrisch ausgebildet ist, und dass die Mittelachse (13, 33, 53) zugleich die Zylinderachse des Fallrohrs (19, 39, 59) ist.

4. Spender nach Anspruch 1, **dadurch gekennzeichnet, dass** das Oberteil (11, 31, 51) des Behälters (11, 12; 31, 32; 51, 52) nach aussen gewölbt ausgebildet ist, derart, dass im Behälter (11, 12; 31, 32; 51, 52) aufsteigendes Gut (43, 63) auf der Innenseite des Oberteils (11, 31, 51) ins Zentrum des Oberteils (11, 31, 51) umgelenkt wird, und dass das Umlenkelement (22, 42, 62) als senkrecht nach innen gerichteter Zapfen im Zentrum des Oberteils (11, 31, 51) angeordnet ist.

5. Spender nach Anspruch 4, **dadurch gekennzeichnet, dass** das Umlenkelement (22, 42) in das obere Ende des Fallrohrs (19, 39) hineinreicht.

6. Spender nach Anspruch 4, **dadurch gekennzeichnet, dass** das Umlenkelement (62) deutlich oberhalb des Fallrohrs (59) endet.

7. Spender nach einem der Ansprüche 1-6, **dadurch gekennzeichnet, dass** die Unterseite (17, 37, 57) des Behälters (11, 12; 31, 32; 51, 52) als Standfläche ausgebildet ist, und dass vorzugsweise auf der Unterseite (17) zusätzlich Füsse (18) angeordnet sind.

8. Spender nach Anspruch 1, **dadurch gekennzeichnet, dass** Oberteil (11, 31, 51) und Unterteil (12, 32, 52) des Behälters (11, 12; 31, 32; 51, 52) aus demselben Material bestehen.

9. Spender nach Anspruch 8, **dadurch gekennzeichnet, dass** Oberteil (11, 51) und Unterteil (12, 52) des Behälters (11, 12; 51, 52) aus einem Kunststoff bestehen.

10. Spender nach Anspruch 8, **dadurch gekennzeichnet, dass** Oberteil (31) und Unterteil (32) des Behälters (31, 32) aus Glas bestehen.

11. Spender nach Anspruch 9, **dadurch gekennzeichnet, dass** zum lösbaren Verbinden von Oberteil (11, 51) und Unterteil (12, 52) im Bereich der Trennebene (14, 54) am Umfang verteilt einrastende Verschlusselemente (15a-c) am Behälter (11, 12; 51, 52) angeordnet sind.

12. Spender nach Anspruch 11, **dadurch gekennzeichnet, dass** die Verschlusselemente (15a-c) jeweils ein am Oberteil (11, 51) angeordnetes, nach innen vorstehendes Rastelement (24a-c) und eine am Unterteil (12, 52) angeordnete, nach aussen vorstehende Halterippe (23a-c) umfassen, hinter welche beim Schliessen des Behälters (11, 12; 51, 52) das Oberteil (11, 51) mit dem zugehörigen Rastelement (24a-c) einrastend greift.

13. Spender nach Anspruch 12, **dadurch gekennzeichnet, dass** die Verschlusselemente (15a-c) gleichzeitig zum Führen des Oberteils (11, 51) beim Aufsetzen des Oberteils (11, 51) auf das Unterteil (12, 52) ausgebildet sind.

14. Spender nach Anspruch 10, **dadurch gekennzeichnet, dass** zum lösbaren Verbinden von Oberteil (31) und Unterteil (32) ein, vorzugsweise flächiges und durchbrochenes, elastisches Verschlusselement (26, 29) vorgesehen ist, mit welchem das auf dem Unterteil (32) aufsitzende Oberteil (31) gegen das Unterteil (32) verspannt wird.

15. Spender nach Anspruch 14, **dadurch gekennzeichnet, dass** das elastische Verschlusselement (26, 29) auf dem Oberteil (31) aufliegend das Oberteil (31) umgreift und mit über das Oberteil (31) hinausgehenden Laschen (27a-c) lösbar am Unterteil (32) befestigt ist.

16. Spender nach einem der Ansprüche 1-15, **dadurch gekennzeichnet, dass** das Umlenkelement (22, 42) und die zweite Öffnung (20, 40) in Grösse und Anordnung relativ zueinander derart ausgebildet sind, dass gleichzeitig mehrere Elemente des zu spendenden Gutes (43) durch die zweite Öffnung (20, 40) in das Fallrohr (19, 39) eintreten können.

17. Spender nach einem der Ansprüche 1-15, **dadurch gekennzeichnet, dass** das Umlenkelement (62) und die zweite Öffnung (60) in Grösse und Anordnung relativ zueinander derart ausgebildet sind, dass jeweils nur ein Element (63) des zu spendenden Gutes durch die zweite Öffnung (60) in das Fallrohr (59) eintreten kann.

## Claims

1. A dispenser (10, 30, 50) for the portioned dispensing of a coarse-grained, free-flowing product (43, 63), in particular in the form of peanuts, chocolate buttons or balls or the like, which is stored in the dispenser (10, 30, 50), comprising a container (11, 12; 31, 32; 51, 52) having a top side (16, 36, 56) and a bottom side (17, 37, 57) for receiving the product to be dispensed, wherein a first opening (21, 41, 61) is provided on the bottom side (17, 37, 57), from which a down spout (19, 39, 59) extends in the vertical direction into the interior of the container (11, 12; 31, 32; 51, 52), which down spout (19, 39, 59) has a second opening (20, 40, 60) at the top end, through which the product (43, 63) present in the container (11, 1 2; 31, 32; 51, 52) can enter the down spout (19, 39, 59) and exit through the first opening (21, 41, 61) downwards out of the container (11, 12; 31 , 32; 51, 52), **characterized in that** a deflector element (22, 42, 62), which deflects product (43, 63) rising in the container (11, 12; 31, 32; 51, 52) into the second opening (20, 40, 60) is arranged in the area of the second opening (20, 40, 60), that the container (11, 12; 31, 32; 51, 52) can be separated in a separating plane (14, 34, 54) into a top part (11, 31, 51) and a bottom part (12, 32, 52) and can be releasably assembled from the top part (11, 31, 51) and the bottom part (12, 32, 52), that the down spout (19, 39, 59) is arranged on the bottom part (12, 32, 52), and that the deflector element (22, 42, 62) is arranged on the top part (11, 31, 51).

2. The dispenser as claimed in claim 1, **characterized in that** the down spout (19, 39, 59) is molded onto the bottom part (12, 32, 52) and forms an integrated unit, and that the deflector element (22, 42, 62) is molded onto the top part (11, 31, 51) and forms an integrated unit.

3. The dispenser as claimed in one of claims 1-2, **characterized in that** the container (11, 12; 31, 32; 51, 52) is designed rotationally symmetrically with respect to a central axis (13, 33, 53), that the down spout (19, 39, 59) is designed substantially cylindrically, and that the central axis (13, 33, 53) is simultaneously the cylinder axis of the down spout (19, 39, 59).

4. The dispenser as claimed in claim 1, **characterized in that** the top part (11, 31 , 51) of the container (11, 12; 31, 32; 51, 52) is curved outwards in such a way that product (43, 63) rising in the container (11, 12; 31, 32; 51, 52) is deflected on the inside of the top part (11, 31, 51) into the centre of the top part (11, 31, 51), and that the deflector element (22, 42, 62) is arranged in the form of a vertically inwardly directed peg in the centre of the top part (11, 31, 51).

5. The dispenser as claimed in claim 4, **characterized in that** the deflector element (22, 42) projects into the top end of the down spout (19, 39).

6. The dispenser as claimed in claim 4, **characterized in that** the deflector element (62) ends significantly above the down spout (59).

7. The dispenser as claimed in one of claims 1-6, **characterized in that** the bottom side (17, 37, 57) of the container (11, 12; 31, 32; 51, 52) is designed as a base, and that preferably additional feet (18) are arranged on the bottom side (17).

8. The dispenser as claimed in claim 1, **characterized in that** top part (11, 31 , 51) and bottom part (12, 32, 52) of the container (11, 12; 31, 32; 51, 52) are made of the same material.

9. The dispenser as claimed in claim 8, **characterized in that** top part (11, 51) and bottom part (12, 52) of the container (11, 12; 51, 52) are made from a plastic.

10. The dispenser as claimed in claim 8, **characterized in that** top part (31) and bottom part (32) of the container (31, 32) are made of glass.

11. The dispenser as claimed in claim 9, **characterized in that**, in order to releasably connect top part (11, 51) and bottom part (12, 52), latching locking elements (15a-c) distributed around the circumference are arranged on the container (11, 12; 51, 52) in the region of the separating plane (14, 54).

12. The dispenser as claimed in claim 11, **characterized in that** the locking elements (1 5a-c) in each case comprise an inwardly projecting latching element (24a-c) which is arranged on the top part (11, 51), and an outwardly projecting retaining rib (23a-c) which is arranged on the bottom part (12, 52) and behind which the top part (11, 51) engages with the associated latching element (24a-c) in a latching manner when the container (11, 12; 51, 52) is closed.

13. The dispenser as claimed in claim 12, **characterized in that** the locking elements (15a-c) are designed simultaneously to guide the top part (11, 51) when the top part (11, 51) is placed on the bottom part (12, 52).

14. The dispenser as claimed in claim 10, **characterized in that**, in order to releasably connect top part (31) and bottom part (32), a preferably flat and perforated elastic locking element (26, 29), by means of which the top part (31) resting on the bottom part (32) is clamped against the bottom part (32), is provided.

15. The dispenser as claimed in claim 14, **characterized in that** the elastic locking element (26, 29) resting on the top part (31) encompasses the top part (31) and is releasably fixed to the bottom part (32) by means of taps (27a-c) projecting beyond the top part (31).

16. The dispenser as claimed in one of claims 1-15, **characterized in that** the deflector element (22, 42) and the second opening (20, 40) are designed in size and arrangement relative to one another in such a way that a plurality of elements of the product (43) to be dispensed can simultaneously enter the down spout (19, 39) through the second opening (20, 40).

17. The dispenser as claimed in one of claims 1-15, **characterized in that** the deflector element (62) and the second opening (60) are designed in size and arrangement relative to one another in such a way that in each case only one element (63) of the product to be dispensed can enter the down spout (59) through the second opening (60).

## Revendications

1. Épandeur (10, 30, 50) destiné à distribuer de façon divisée une matière à gros grains et coulante (43, 63) emmagasinée dans l'épandeur (10, 30, 50), en particulier sous la forme d'arachides, de lentilles ou billes de chocolat ou analogues, qui comprend un récipient (11, 12; 31, 32 ; 51, 52) présentant un côté supérieur (16, 36, 56) et un côté inférieur (17, 37, 57), et destiné à contenir la matière à épandre, dans lequel, sur le côté inférieur (17, 37, 57), est ménagée une première ouverture (21, 41, 61) en partant de laquelle un tube de descente (19, 39, 59) se prolonge dans la direction verticale dans l'espace intérieur du récipient (11, 12 ; 31, 32 ; 51, 52), lequel tube de descente (19, 39, 59) présente à son extrémité supérieure une seconde ouverture (20, 40, 60) à travers laquelle la matière (43, 63) présente dans le récipient (11, 12 ; 31, 32 ; 51, 52) peut entrer dans le tube de descente (19, 39, 59) pour sortir ensuite du récipient (11, 12 ; 31, 32 ; 51, 52) de haut en bas à travers la première ouverture (21, 41, 61), **caractérisé en ce que**, dans la région de la seconde ouverture (20, 40, 60), est disposé un élément de renvoi (22, 42, 62) qui renvoie dans la seconde ouverture (20, 40, 60) la matière (43, 63) qui s'élève dans le récipient (11, 12 ; 31, 32 ; 51, 52), **en ce que** le récipient (11, 12 ; 31, 32 ; 51, 52) peut être divisé dans un plan de séparation (14, 34, 54) en une partie supérieure (11, 31, 51) et une partie inférieure (12, 32, 52) et peut être assemblé de façon démontable à partir de la partie supérieure (11, 31, 51) et de la partie inférieure (12, 32, 52), **en ce que** le tube de descente (19, 39, 59) est disposé au niveau de la partie inférieure (12, 32, 52), et **en ce que** l'élément de renvoi (22, 42, 62) est disposé au niveau de la partie supérieure (11, 31, 51).

2. Épandeur selon la revendication 1, **caractérisé en ce que** le tube de descente (19, 39, 59) est solidaire de la partie inférieure (12, 32, 52) et forme une unité d'une seule pièce avec elle, et **en ce que** l'élément de renvoi (22, 42, 62) est solidaire de la partie supérieure (11, 31, 51) et forme une unité d'une seule pièce avec elle.

3. Épandeur selon l'une des revendications 1 et 2, **caractérisé en ce que** le récipient (11, 12 ; 31, 32 ; 51, 52) présente une symétrie de rotation par rapport à un axe central (13, 33, 53), **en ce que** le tube de descente (19, 39, 59) est de forme sensiblement cylindrique et **en ce que** l'axe central (13, 33, 53) est en même temps l'axe du cylindre du tube de descente (19, 39, 59).

4. Épandeur selon la revendication 1, **caractérisé en ce que** la partie supérieure (11, 31, 51) du récipient (11, 12 ; 31, 32 ; 51, 52) est de forme bombée vers l'extérieur, de sorte que la matière (43, 63) qui s'élève dans le récipient (11, 12 ; 31, 32 ; 51, 52) est renvoyée sur le côté intérieur de la partie supérieure (11, 31, 51) jusqu'au centre de la partie supérieure (11, 31, 51) et **en ce que** l'élément de renvoi (22, 42, 62) est agencé au centre de la partie supérieure (11, 31, 51) sous la forme d'un téton dirigé verticalement vers l'intérieur.

5. Épandeur selon la revendication 4, **caractérisé en ce que** l'élément de renvoi (22, 42) est engagé dans l'extrémité supérieure du tube de descente (19, 39).

6. Épandeur selon la revendication 4, **caractérisé en ce que** l'élément de renvoi (62) se termine nettement au-dessus du tube de descente (59).

7. Épandeur selon l'une des revendications 1 à 6, **caractérisé en ce que** la face inférieure (17, 37, 57) du récipient (11, 12 ; 31 , 32 ; 51, 52) constitue une surface d'appui, et **en ce que** des pieds (18) sont de préférence disposés en supplément sur la face inférieure (17).

8. Epandeur selon la revendication 1, **caractérisé en ce que** la partie supérieure (11, 31, 51) et la partie inférieure (12, 32, 52) du récipient (11, 12 ; 31, 32 ; 51, 52) sont faites de la même matière.

9. Épandeur selon la revendication 8, **caractérisé en ce que** la partie supérieure (11, 51) et la partie inférieure (12, 52) du récipient (11, 12 ; 51, 52) sont faites d'une matière plastique.

10. Epandeur selon la revendication 8, **caractérisé en ce que** la partie supérieure (31) et la partie inférieure (32) du récipient (31, 32) sont faits de verre.

11. Épandeur selon la revendication 9, **caractérisé en ce que**, pour assembler la partie supérieure (11, 51) et la partie inférieure (12, 52) de façon démontable, des éléments de fermeture à encliquetage (15a-c) sont disposés sur le récipient (11, 12 ; 51, 52) dans la région du plan de séparation (14, 54) de façon répartie sur la circonférence.

12. Épandeur selon la revendication 11, **caractérisé en ce que** les éléments de fermeture (1 5a-c) comprennent chacun un élément d'encliquetage (24a-c) saillant vers l'intérieur, solidaire de la partie supérieure (11, 51), et une nervure de retenue (23a-c) saillant vers l'extérieur, solidaire de la partie inférieure (1 2, 52), derrière laquelle la partie supérieure (11, 51) entre en prise par encliquetage avec l'élément d'encliquetage correspondant (24a-c) lors de la fermeture du récipient (11, 12 ; 51, 52).

13. Epandeur selon la revendication 12, **caractérisé en ce que** les éléments de fermeture (15a-c) sont en même temps conçus pour guider la partie supérieure (11, 51) lors de la pose de la partie supérieure (11, 51) sur la partie inférieure (12, 52).

14. Épandeur selon la revendication 10, **caractérisé en ce que**, pour l'assemblage démontable de la partie supérieure (31) et de la partie inférieure (32), on utilise un élément de fermeture élastique (26, 29), de préférence plat et interrompu, au moyen duquel la partie supérieure (31) posée sur la partie inférieure (32) est serrée contre la partie inférieure (32).

15. Épandeur selon la revendication 14, **caractérisé en ce que** l'élément de fermeture élastique (26, 29) appuyé sur la partie supérieure (31) entoure la partie supérieure (31) et est fixé à la partie inférieure (32) de façon démontable au moyen de pattes (27a-c) qui débordent au-delà de la partie supérieure (31).

16. Épandeur selon l'une des revendications 1 à 15, **caractérisé en ce que** l'élément de renvoi (22, 42) et la seconde ouverture (20, 40) sont conçus en grandeur et en disposition l'un par rapport à l'autre de telle sorte que plusieurs éléments de la matière à épandre (43) peuvent entrer simultanément dans le tube de descente (19, 39) à travers la seconde ouverture (20, 40).

17. Epandeur selon l'une des revendications 1 à 15, **caractérisé en ce que** l'élément de renvoi (62) et la seconde ouverture (60) sont conçus en grandeur et en disposition l'un par rapport à l'autre de telle sorte qu'un seul élément (63) de la matière à épandre puisse entrer à la fois dans le tube de descente (59) à travers la seconde ouverture (60).
